# FASCICULE DE BREVET EUROPEEN

(11) **EP 3 172 832 B1**
(45) Date de publication et mention de la délivrance du brevet: **22.07.2020**
(21) Numéro de dépôt: 15753118.7
(22) Date de dépôt: 17.07.2015
(51) Int. Cl.: H02P 29/024

(54) **PROCÉDÉ ET UNITÉ DE CONTRÔLE ET/OU DE PROTECTION D'UN ACTIONNEUR D'UN ÉQUIPEMENT MOBILE D'UN BÂTIMENT**
VERFAHREN UND EINHEIT ZUM STEUERN UND/ODER SCHÜTZEN EINES AKTUATORS EINES TEILS EINER MOBILEN AUSRÜSTUNG EINES GEBÄUDES
METHOD AND UNIT FOR CONTROLLING AND/OR PROTECTING AN ACTUATOR OF A PIECE OF MOBILE EQUIPMENT OF A BUILDING

(30) Priorité: 25.07.2014 FR 1457176
(43) Date de publication de la demande: 31.05.2017
(73) Titulaire: SOMFY ACTIVITES SA, 74300 Cluses (FR)
(72) Inventeur: TERRIER, Nicolas, 69008 Lyon (FR); MUGNIER, David, 74130 Mont-Saxonnex (FR)
(74) Mandataire: Verriest, Philippe
(86) Numéro de dépôt international: PCT/FR2015/051969
(87) Numéro de publication internationale: WO 2016/012702

(56) Documents cités:
- JP-A- 2007 052 797
- US-A1- 2012 265 457

## Description

La présente invention concerne un procédé et une unité de contrôle et/ou de protection d'un actionneur d'un équipement mobile d'un bâtiment, l'actionneur comprenant un moteur du type comprenant un rotor et un stator.

La présente invention peut par exemple être mise en œuvre pour un actionneur comprenant un moteur à courant continu sans balais à commutation électronique (ou encore appelé « BLDC », acronyme de l'expression anglo-saxonne BrushLess Direct Current). Un moteur de ce type comprend un rotor pourvu d'aimants permanents et d'un stator pourvu de plusieurs enroulements.

Le moteur comprend, en outre, un système de commande agencé pour alimenter successivement les enroulements en énergie électrique. Pour que le moteur fonctionne, le champ électromagnétique engendré par l'alimentation successive des enroulements doit être synchronisé sur la position du rotor.

Pour ce faire, le système de commande comprend des capteurs de position agencés pour déterminer la position du rotor.

Ce type de moteur peut être régulé selon sa vitesse de rotation. Il est ainsi possible de limiter la vitesse de sorte que la vitesse de rotation ne dépasse pas la vitesse maximale admissible par les éléments mécaniques de l'actionneur.

Ce type de moteur peut également être régulé selon son couple. Il est ainsi possible de limiter le couple de sorte que le couple ne dépasse pas le couple maximal admissible par les éléments mécaniques de l'actionneur.

Ce système donne satisfaction lorsque tous les éléments du moteur fonctionnent correctement. Toutefois, l'actionneur, et en particulier le moteur, nécessite d'être protégé puisqu'il existe, notamment, toujours un risque que le courant appliqué au moteur démagnétise les aimants permanents, qu'un court-circuit se forme, notamment, lors du changement d'alimentation des enroulements, ou que le couple appliqué au moteur augmente anormalement.

La présente invention vise à résoudre tout ou partie des inconvénients mentionnés ci-dessus.

A cet effet, la présente invention concerne un procédé de contrôle et/ou de protection d'un actionneur d'un équipement mobile d'un bâtiment, l'actionneur comprenant un moteur du type comprenant un rotor et un stator, le procédé comprenant les étapes consistant à :
- disposer d'un signal instantané représentatif de l'alimentation électrique fournie au moteur, le signal instantané présentant une pluralité d'impulsions,
- réaliser un échantillonnage de valeurs du signal instantané, l'échantillonnage étant synchronisé avec au moins une partie des impulsions de la pluralité d'impulsions du signal instantané,
- réaliser un contrôle de chaque valeur échantillonnée selon un premier critère de protection de l'actionneur, et émettre une première information d'anomalie pour chaque valeur échantillonnée ne respectant pas le premier critère de protection,
- acquérir un ensemble de valeurs parmi les valeurs échantillonnées,
- réaliser un contrôle selon un second critère de protection de l'actionneur appliqué à l'ensemble de valeurs échantillonnées acquises, et émettre une seconde information d'anomalie pour l'ensemble de valeurs échantillonnées acquises ne respectant pas le second critère de protection.

Les critères de protection peuvent s'appliquer non seulement au moteur mais également à tout ou partie de l'ensemble des composants constituant l'actionneur. Il s'agit bien entendu du moteur mais également de l'électronique de pilotage du moteur et des éléments de liaison mécanique de l'actionneur à l'équipement mobile.

Le contrôle réalisé sur chaque valeur échantillonnée selon le premier critère de protection est un contrôle systématique. Ainsi, chaque impulsion est mesurée et chaque valeur d'impulsion non conforme au premier critère de protection est détectée.

Au contraire, l'ensemble de valeurs échantillonnées acquises est soumis à un contrôle selon le deuxième critère de protection pour détecter une anomalie se traduisant par une variation durable pouvant ne pas entraîner de violation du premier critère de protection.

Il apparaît ainsi que ces deux types de contrôles selon deux critères de protection différents permettent une protection optimale du moteur. En effet, le signal instantané représentatif de l'alimentation électrique fournie au moteur est l'image du couple fourni par le moteur.

Une multitude d'anomalies de fonctionnement peut ainsi être détectée de sorte à protéger, notamment, le moteur d'un courant présentant une valeur trop importante pouvant provoquer, par exemple, une démagnétisation d'aimants dans le cas d'un moteur de type à courant continu sans balais à commutation électronique, ou un couple supérieur au couple maximal admissible par le moteur.

Selon un aspect de l'invention, le rotor ou le stator du moteur comprend une pluralité d'enroulements successivement alimentés de manière variable pour engendrer un mouvement rotatif du rotor, selon des séquences de commande. Les séquences de commande correspondent à des configurations d'alimentation successives séparées par des transitions ou des changements de commande.

Par exemple, des commutateurs peuvent être intercalés entre l'alimentation électrique du moteur et les enroulements de manière à faire varier l'alimentation dans les enroulements selon les configurations d'alimentation.

De préférence, une valeur échantillonnée est acquise entre deux changements de commande.

En particulier, la valeur échantillonnée acquise correspond à une dernière impulsion du signal instantané entre deux changements de commande. Cette disposition permet de déterminer de manière systématique la valeur échantillonnée devant être acquise sans avoir à réaliser d'étape spécifique consistant à déterminer quelle sera la valeur devant être acquise à partir des valeurs échantillonnées entre deux changements de commande.

Selon un aspect de l'invention, le moteur présente au moins un premier mode de fonctionnement, notamment un mode de démarrage du moteur, et un second mode de fonctionnement, notamment un mode de fonctionnement stabilisé, et dans lequel le premier critère de protection et/ou le second critère de protection de l'actionneur est modifié en fonction du mode de fonctionnement du moteur.

Cette disposition permet d'adapter la protection, c'est-à-dire le déclenchement de l'arrêt sécuritaire du moteur, en fonction du mode de fonctionnement.

Selon un aspect de l'invention, une grandeur représentative à partir dudit ensemble de valeurs échantillonnées acquises est déterminée, et le second critère de protection de l'actionneur est appliqué à ladite grandeur représentative.

La grandeur représentative n'est pas déterminée nécessairement à partir de chaque valeur échantillonnée mais seulement à partir de l'ensemble de valeurs échantillonnées acquises. Ainsi, la détermination de la grandeur représentative ne demande pas un effort de calcul important.

Selon un aspect de l'invention, le stator du moteur comprend une pluralité d'enroulements successivement soumis à l'alimentation électrique fournie au moteur.

De préférence, l'ensemble de valeurs échantillonnées acquises correspond à un échantillonnage synchronisé avec chaque dernière impulsion avant le changement de l'enroulement alimenté.

Selon un aspect de l'invention, lors de l'étape d'acquisition et de détermination de la grandeur représentative, une valeur échantillonnée acquise ultérieurement aux valeurs échantillonnées acquises est ajoutée à l'ensemble de valeurs échantillonnées acquises, la grandeur représentative étant déterminée à nouveau suite à l'ajout de la valeur échantillonnée acquise ultérieurement.

Cette disposition permet de mettre à jour de manière continue la grandeur représentative. Ainsi, il s'agit d'une grandeur représentative variable en fonction de l'évolution du fonctionnement du moteur et non pas d'une grandeur représentative discrète.

Selon un aspect de l'invention, lors de l'ajout de la valeur échantillonnée acquise ultérieurement, la plus ancienne valeur échantillonnée acquise est supprimée de l'ensemble des valeurs échantillonnées acquises.

De préférence, la grandeur représentative est une moyenne glissante des valeurs échantillonnées acquises.

Cette disposition permet de déterminer une grandeur représentative correspondant à l'évolution du fonctionnement du moteur. La grandeur représentative n'est ainsi pas perturbée par des valeurs échantillonnées acquises trop anciennes.

Selon un aspect de l'invention, le contrôle selon le second critère de protection de l'actionneur comprend, en outre, une comparaison d'une évolution temporelle des grandeurs représentatives successivement déterminées avec une évolution temporelle seuil.

A titre d'exemple, l'évolution temporelle seuil correspond à un seuil de variation de la grandeur représentative sur une période de temps donnée.

Le non-respect du second critère de protection de l'actionneur peut notamment correspondre au dépassement par l'évolution temporelle des grandeurs représentatives de l'évolution temporelle seuil.

De préférence, la seconde information d'anomalie émise suite à un dépassement de l'évolution temporelle seuil comprend une indication signalant le dépassement de l'évolution temporelle seuil.

Ainsi, une évolution trop rapide de la grandeur représentative, étant engendrée indirectement par l'alimentation électrique fournie au moteur, est détectée par un contrôle selon le second critère de protection.

Cette disposition permet de détecter une augmentation ou une diminution brutale du signal instantané représentatif de l'alimentation électrique fournie au moteur bien que le premier critère de protection de l'actionneur soit toujours respecté.

Selon un aspect de l'invention, le contrôle selon le premier critère de protection de l'actionneur comprend une comparaison de chaque valeur échantillonnée à une première valeur seuil.

De préférence, la première information d'anomalie est émise lorsque la valeur échantillonnée est supérieure à la première valeur seuil.

De préférence, la première valeur seuil est définie comme correspondant à la plus basse des valeurs relatives au signal instantané représentatif de l'alimentation électrique fournie au moteur au-delà de laquelle une anomalie apparaît.

Selon un aspect de l'invention, le contrôle selon le second critère de protection de l'actionneur comprend une comparaison de la grandeur représentative à une seconde valeur seuil.

De préférence, la seconde information d'anomalie est émise lorsque la grandeur représentative est supérieure à la seconde valeur seuil.

En particulier, lorsqu'une seconde information d'anomalie est émise pour une grandeur représentative supérieure à la seconde valeur seuil, la seconde information d'anomalie comprend une indication signalant le franchissement de la seconde valeur seuil.

Ainsi, il apparaît que la seconde valeur seuil peut être dépassée, même si le premier critère de protection de l'actionneur est respecté.

En outre, dans le cas où les critères de protection de l'actionneur sont modifiés en fonction du mode de fonctionnement du moteur, cette modification peut être par exemple réalisée en modifiant la valeur du premier seuil et/ou du second seuil.

Selon un aspect de l'invention, la première valeur seuil est modifiée selon le mode de fonctionnement du moteur, notamment le mode de démarrage du moteur ou le mode fonctionnement stabilisé du moteur.

Cette disposition permet d'adapter la première valeur seuil au mode de fonctionnement du moteur. En effet, les valeurs seuils à ne pas dépasser pour le signal représentatif de l'alimentation électrique du moteur ne sont pas constantes selon les modes de fonctionnement du moteur.

Selon un aspect de l'invention, la première valeur seuil est définie relativement à une intensité limite lorsque le moteur passe d'une vitesse de rotation nulle à une vitesse de rotation déterminée. Ceci correspond au mode de démarrage du moteur.

De préférence, ladite intensité limite correspond à une valeur maximale du courant admissible par l'actionneur en fonctionnement.

Selon un aspect de l'invention, la première valeur seuil est définie relativement à une intensité limite lorsque le moteur a atteint au moins une fois la vitesse de rotation déterminée après le démarrage.

De préférence, ladite intensité limite correspond à une valeur maximale admissible du courant, après le passage dans le moteur, à ne pas dépasser afin que le couple du moteur soit en deçà d'une valeur limite de fonctionnement.

Selon un aspect de l'invention, la seconde valeur seuil est modifiée selon un mode de fonctionnement du moteur, notamment le mode de démarrage du moteur ou le mode de fonctionnement stabilisé du moteur.

Cette disposition permet d'adapter la seconde valeur seuil au mode de fonctionnement du moteur. En effet, les valeurs seuils à ne pas dépasser pour le signal instantané représentatif de l'alimentation électrique du moteur ne sont pas constantes selon les modes de fonctionnement du moteur.

Selon un aspect de l'invention, la seconde valeur seuil est définie comme égale à une intensité limite.

De préférence, ladite intensité limite correspond à une intensité moyenne de fonctionnement limite au-delà de laquelle le couple du moteur est supérieur au couple maximum admissible par les éléments mécaniques de l'actionneur.

Selon un aspect de l'invention, la seconde valeur seuil est définie comme égale à une intensité limite de fonctionnement stabilisé lorsque le moteur a fonctionné pendant une période de temps définie suite au début de la régulation de la vitesse de rotation.

La présente invention concerne également un produit programme d'ordinateur comprenant des instructions de code agencées pour mettre en œuvre les étapes d'un procédé de contrôle et/ou de protection tel que décrit précédemment.

La présente invention concerne, en outre, une unité de contrôle et/ou de protection pourvue d'un processeur comprenant en mémoire les instructions de code d'un produit programme d'ordinateur tel que décrit précédemment, l'unité de contrôle et/ou de protection étant agencée pour lire un signal instantané représentatif de l'alimentation électrique fournie à un moteur de type comprenant un rotor et un stator.

Selon un aspect de l'invention, le signal instantané représentatif de l'alimentation électrique fournie au moteur est une tension ou un courant électrique image du couple fourni par le moteur.

Selon un aspect de l'invention, l'unité de contrôle et/ou de protection comprend, en outre, un générateur de signaux agencé pour délivrer un signal instantané représentatif de l'alimentation électrique fournie au moteur, et un élément de polarisation agencé pour établir un signal d'entrée par défaut en lieu et place du signal instantané lorsque le générateur de signaux présente un défaut engendrant l'absence de signal.

L'élément de polarisation sert à polariser l'entrée du convertisseur analogique numérique lors de certains cas de défaut, en particulier la casse d'un composant électronique.

Si, en cas de fonctionnement anormal, le signal instantané représentatif de l'alimentation électrique fournie au moteur ne peut plus être lu par l'unité de contrôle, le signal d'entrée par défaut est détecté.

Cette disposition empêche la lecture d'un signal aléatoire lorsqu'un incident provoque la coupure du signal instantané représentatif de l'alimentation électrique fournie au moteur.

En effet, la lecture d'un signal aléatoire n'engendrera pas forcément la détection d'une anomalie en appliquant le premier critère de protection et le deuxième critère de protection de l'actionneur. Au contraire, le signal d'entrée par défaut, lorsqu'il est lu par l'unité de contrôle et/ou de protection, est bien détecté comme étant une anomalie.

Selon un aspect de l'invention, l'unité de contrôle et/ou de protection comprend une unité de traitement numérique, par exemple un microcontrôleur, l'unité de traitement numérique comprenant le processeur et un convertisseur analogique numérique agencé pour lire et convertir en un signal numérique interprétable par le processeur le signal instantané représentatif de l'alimentation électrique fournie au moteur.

Selon un aspect de l'invention, le processeur est agencé pour réaliser automatiquement un contrôle selon le premier critère de protection de l'actionneur à partir du signal numérique interprétable.

De préférence, le processeur est agencé pour acquérir un ensemble de valeurs parmi les valeurs échantillonnées et déterminer une grandeur représentative dudit ensemble de valeurs échantillonnées acquises.

En particulier, les valeurs échantillonnées non acquises pour la détermination de la valeur représentative ne sont pas conservées dans la mémoire du processeur. Cette disposition a pour but de limiter l'utilisation des ressources du processeur.

De façon indépendante au procédé précédemment décrit, la précédente invention concerne une unité de contrôle et/ou de protection comprenant :
- une unité de traitement numérique agencée pour lire un signal instantané représentatif de l'alimentation électrique fournie à un moteur de type comprenant un rotor et un stator,
- un générateur de signaux, agencé pour délivrer un signal instantané représentatif de l'alimentation électrique fournie au moteur, et
- un élément de polarisation agencé pour établir un signal d'entrée par défaut en lieu et place du signal instantané lorsque le générateur de signaux ne transmet pas de signal instantané.

De préférence, l'élément de polarisation est alimenté par la tension d'alimentation de l'unité de traitement numérique. En particulier, l'élément de polarisation comprend une résistance.

Selon un aspect de l'invention, le générateur de signaux est agencé pour réaliser un filtrage analogique d'une intensité sortante du moteur et obtenir un signal instantané représentatif de l'alimentation électrique fournie au moteur. De préférence, le filtrage analogique est de type RC.

La présente invention concerne, en outre, un actionneur d'un équipement mobile d'un bâtiment comprenant :
- un moteur de type comprenant un rotor et un stator,
- un module d'alimentation agencé pour fournir une alimentation électrique au moteur,
- une unité de contrôle et/ou de protection telle que précédemment décrite, agencée pour lire un signal instantané représentatif de l'alimentation électrique fournie au moteur.

De toute façon l'invention sera bien comprise à l'aide de la description qui suit en référence aux dessins schématiques annexés représentant, à titre d'exemple non limitatif, une forme d'exécution de ce procédé et de cette unité de contrôle et/ou de protection.

Figure 1 est un schéma électrique d'un actionneur comprenant un moteur, un module d'alimentation et une unité de contrôle et/ou de protection conforme à un mode de réalisation de l'invention.

Figure 2 est un schéma représentant l'état des commutateurs du module d'alimentation de la figure 1.

Figure 3 est un schéma présentant des commutateurs en regard de l'état d'alimentation d'enroulements de l'actionneur de la figure 1.

Figure 4 est un graphique de signaux instantanés représentatifs de l'alimentation électrique fournie au moteur de la figure 1.

Figure 5 est une vue de détail de la figure 4 reprenant une seule séquence de commande du moteur de la figure 1.

Figure 6 est un graphique représentant différents critères de protection de l'actionneur de la figure 1 selon des modes de fonctionnement du moteur.

Figure 7 est un schéma électrique d'une partie de l'actionneur de la figure 1, dans laquelle se trouve un élément de protection suivant un mode de réalisation de l'invention.

Figure 8 est un ordinogramme détaillant les étapes d'un procédé de contrôle et/ou de protection de l'actionneur de la figure 1 conforme à un mode de réalisation de l'invention.

Figures 9 à 12 sont des graphiques représentant une méthode de détermination de l'utilisation des premier et deuxième critères de protection de l'actionneur lors de la mise en œuvre du procédé de contrôle et/ou de protection de la figure 6.

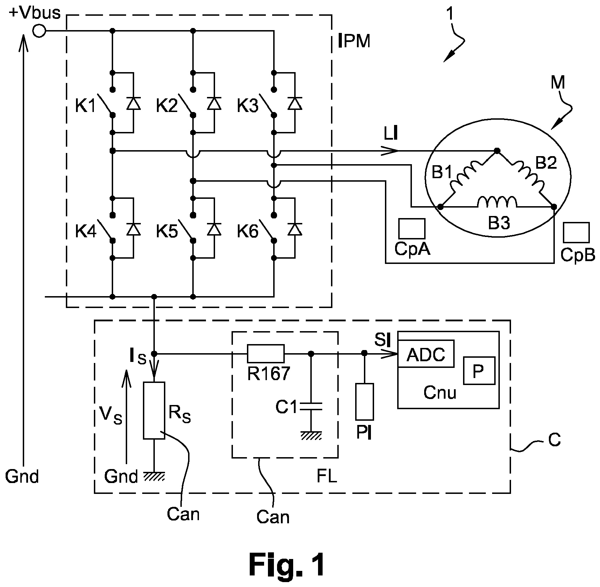

Comme illustré à la figure 1, un actionneur 1 d'un équipement mobile d'un bâtiment, tel qu'un volet roulant ou un store en toile ou à lames orientables, ou encore un portail roulant, comprend un module d'alimentation IPM raccordé à une source de tension continue +Vbus. La valeur de +Vbus est définie par rapport à la masse, ou autrement dit à une tension de référence, Gnd.

Bien entendu, la présente invention s'applique à tous les types de dispositif d'occultation.

L'actionneur 1 comprend, en outre, un moteur M de type comprenant un rotor et un stator. Le moteur M est de type à courant continu sans balais à commutation électronique (ou encore appelé BLDC, acronyme de l'expression anglo-saxonne BrushLess Direct Current).

Le stator du moteur M comprend trois enroulements B1, B2, B3 alimentés de façon séquentielle par le module d'alimentation IPM, ce qui génère un champ électromagnétique tournant. Le rotor, non représenté, comprend des aimants permanents s'orientant dans le sens du champ électromagnétique.

Le moteur M est, en outre, pourvu d'un premier capteur Cp A et d'un deuxième capteur Cp B agencés pour déterminer la position du rotor.

Bien entendu, le nombre de capteurs du moteur permettant de déterminer la position du rotor n'est nullement limitatif, et en particulier peut être de trois. Dans un autre mode de réalisation, le moteur peut également être dépourvu de capteurs de détermination de la position du rotor.

Ainsi, la détection peut être mise en œuvre par d'autres moyens de mesure, par exemple, par la détermination de la force électromotrice du moteur M.

Pour que le moteur fonctionne, l'alimentation successive des enroulements B1, B2, B3 doit être contrôlée de manière synchrone avec la position du rotor.

Le pilotage est de préférence réalisé en phase, mais peut être aussi réalisé en avance ou en retard, de sorte à créer un couple moteur.

Pour l'alimentation successive des enroulements B1, B2, B3, le module d'alimentation IPM est pourvu des commutateurs K1, K2, K3, K4, K5, K6, par exemple de type MOSFET (acronyme du terme anglo-saxon « Metal Oxide Semiconductor Field Effect Transistor »).

Ici et de manière nullement limitative, le module d'alimentation IPM comprend les six commutateurs K1, K2, K3, K4, K5, K6 de type MOSFET dans le même composant.

Bien entendu, l'agencement des commutateurs du module d'alimentation peut être différent, et en particulier ceux-ci peuvent être indépendants, ou encore disposés selon une configuration comprenant trois bras de deux commutateurs.

En outre, les commutateurs du module d'alimentation peuvent être notamment de type IGBT (acronyme du terme anglo-saxon « Insulated Gâte Bipolar Transistor »).

L'actionneur 1 comprend une unité de contrôle et/ou de protection C pourvue d'une unité de traitement numérique Cnu. L'unité de traitement numérique Cnu est pourvue d'un processeur P comprenant un système de régulation de la vitesse de rotation du moteur M.

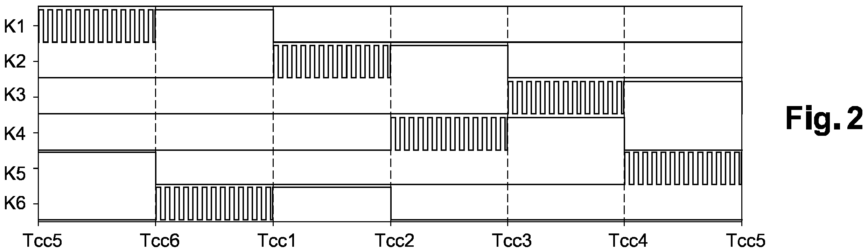

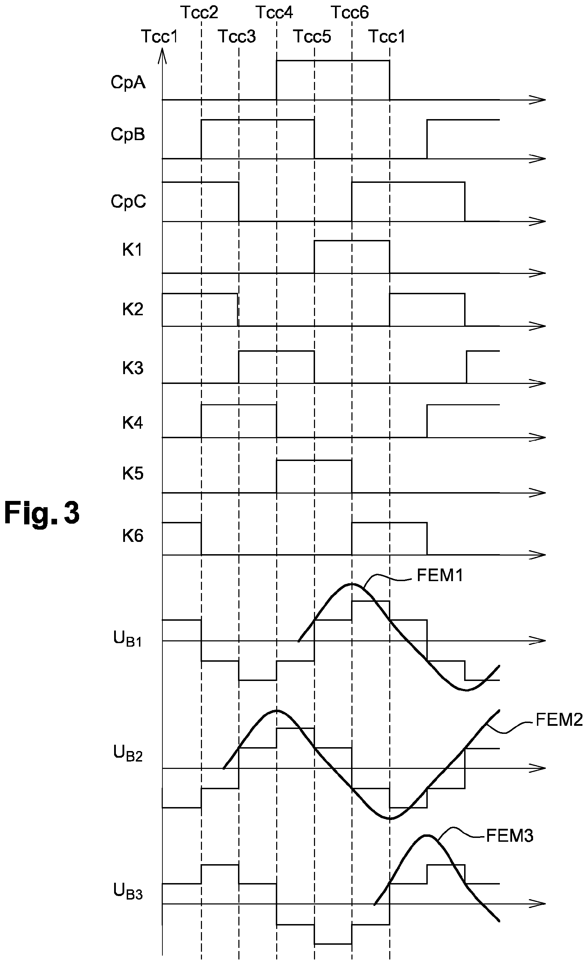

Pour ce faire, le processeur P est agencé pour piloter l'ouverture et la fermeture des commutateurs K1, K2, K3, K4, K5, K6 de manière à alimenter successivement en énergie électrique chaque enroulement B1, B2, B3 du stator. Deux des commutateurs K1, K2, K3, K4, K5, K6 sont alternativement pilotés comme décrit aux figures 2 et 3. Le pilotage de deux des commutateurs K1, K2, K3, K4, K5, K6 correspond à une séquence de commande, le changement de deux des commutateurs K1, K2, K3, K4, K5, K6 pilotés étant appelé changement de commande.

Ainsi, les séquences de commande sont séparées par des changements de commande qui correspondent à des transitions entre une première séquence au cours de laquelle un premier couple des commutateurs K1, K2, K3, K4, K5, K6 est utilisé et une seconde séquence au cours de laquelle un deuxième couple des commutateurs K1, K2, K3, K4, K5, K6 est utilisé.

A la figure 3, les séquences de commande de deux capteurs physiques Cp A, Cp B sont représentés. En outre, la séquence de commande d'un troisième capteur Cp C est représentée. Ce troisième capteur Cp C est un capteur virtuel dont le signal est déterminé à partir des signaux des deux capteurs physiques Cp A et Cp B. Selon une variante, un troisième capteur physique pourrait également être utilisé en lieu et place du capteur virtuel Cp C. Une séquence de commande est comprise entre deux changements de commande Tcc1, Tcc2, Tcc3, Tcc4, Tcc5, Tcc6, par exemple entre Tcc1 et Tcc2.

Comme illustré à la figure 2, le pilotage de deux des commutateurs K1, K2, K3, K4, K5, K6 consiste à maintenir un premier commutateur fermé tandis que l'autre est successivement ouvert et fermé selon une commande en PWM (acronyme du terme anglo-saxon « Pulse Width Modulation », ou encore appelé : « à modulation de largeur d'impulsion »).

Pour reprendre l'exemple de la séquence de commande définie entre Tcc1 et Tcc2, le commutateur K2 est piloté selon un schéma d'ouvertures et de fermetures successives en PWM et le commutateur K6 reste fermé durant toute la séquence de commande. On dit alors que le commutateur K6 fonctionne en pleine onde : il est connecté électriquement durant toute la séquence de commande.

La figure 3 ne différencie pas les séquences de commande des commutateurs K1, K2, K3, K4, K5, K6 selon une configuration PWM ou une configuration pleine onde dans un but de simplification de la figure, bien que ces deux configurations soient exécutées selon le schéma de la figure 2.

A la figure 3, on a représenté l'état des capteurs Cp A, CP B, Cp C qui permettent de déterminer la position du rotor. On a également représenté la tension UB1, UB2, UB3 aux bornes de chaque enroulement B1, B2, B3 et la force électromotrice FEM1, FEM2, FEM3 correspondante à chaque enroulement B1, B2, B3. Il apparaît ainsi qu'après six séquences de commande Tcc1, Tcc2, Tcc3, Tcc4, Tcc5, Tcc6, on retrouve l'état initial de Tcc1 en ce qui concerne la position du rotor et le pilotage des commutateurs K1, K2, K3, K4, K5, K6.

L'unité de traitement numérique Cnu comprend une entrée pourvue d'un convertisseur analogique numérique ADC. L'entrée pourvue du convertisseur analogique numérique ADC est agencée pour transmettre un signal au processeur P à partir du signal qu'elle reçoit.

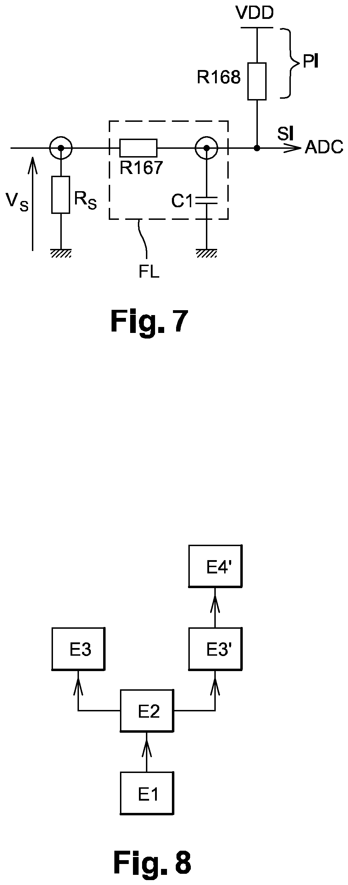

L'actionneur 1 comprend, en outre, un générateur de signaux Can pourvu d'une résistance Rs et d'un filtre analogique FL, par exemple réalisé sous forme d'un circuit RC passe-bas, constitué par exemple par une résistance R167 et une capacité C1 représentées sur la figure 1 et la figure 7.

Le générateur de signaux Can est agencé pour délivrer un signal instantané SI représentatif de l'alimentation électrique fournie au moteur M, en particulier du courant Is, à l'entrée pourvue du convertisseur analogique numérique ADC.

La résistance Rs est disposée entre le module d'alimentation IPM et la masse Gnd. Le signal instantané SI représentatif de l'alimentation électrique fournie au moteur M est obtenu à partir du courant Is, et suite au passage du courant Is dans le générateur de signaux Can.

En d'autres termes, la tension Vs et le courant Is présentent la même forme que le signal instantané SI. Ainsi, l'entrée pourvue du convertisseur analogique numérique ADC lit de manière indirecte une valeur instantanée du courant Is.

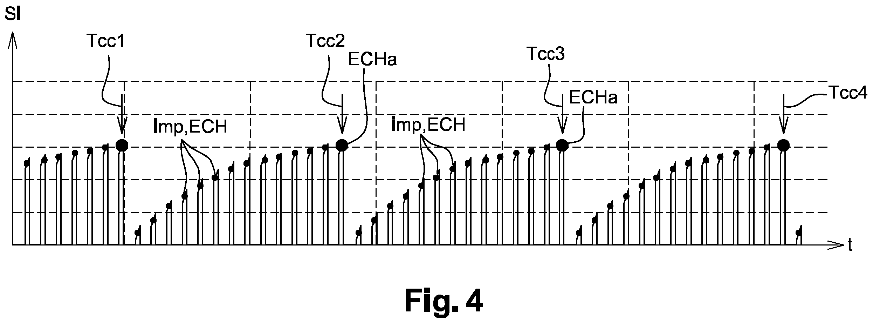

A la figure 4, on a représenté l'évolution du signal instantané SI en fonction du temps t. Les changements d'alimentation électrique des enroulements B1, B2, B3, ou changements de commande Tcc1, Tcc2, Tcc3, Tcc4, Tcc5, Tcc6 sont représentés par des flèches.

Il apparaît que les impulsions imp du signal instantané SI sont croissantes au cours de l'alimentation électrique d'un même enroulement B1, B2, B3, autrement dit au cours d'une séquence de commande. Les impulsions imp sont représentées par des points.

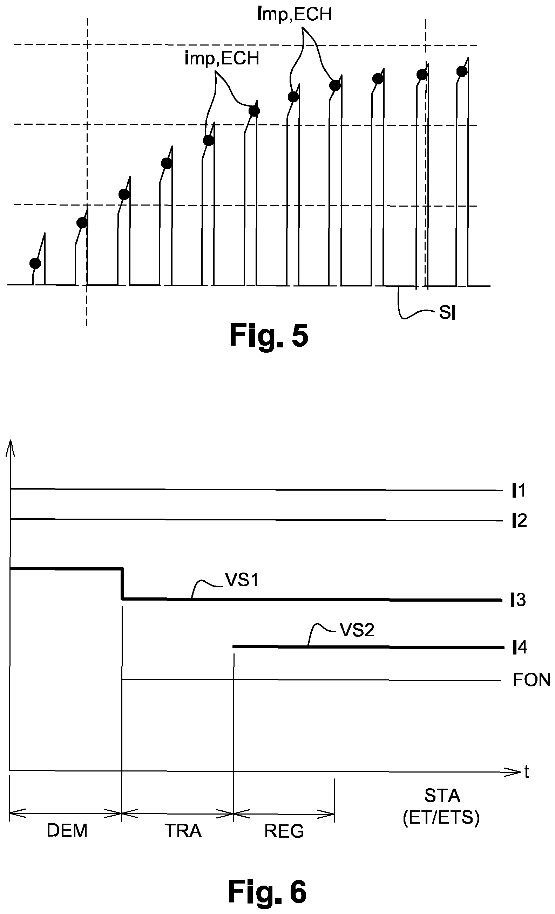

Ce phénomène s'explique par les caractéristiques intrinsèques des enroulements B1, B2, B3. Ce phénomène est également visible à la figure 5. Il apparaît également sur cette figure que l'échantillonnage est réalisé au milieu de chaque impulsion imp. Ceci a pour but d'éviter des phénomènes de perturbation de l'acquisition dus aux commutations des commutateurs K1, K2, K3, K4, K5, K6.

Les séquences de commande peuvent être décalées (en retard ou en avance) par rapport aux capteurs Cp A, Cp B en fonction du mode de pilotage. Par exemple, les séquences des capteurs Cp A, Cp B et de commande des commutateurs K1, K2, K3, K4, K5, K6 sont en phase lors de la séquence de démarrage puis décalées une fois le moteur M en rotation.

Comme illustré aux figures 1 et 7, l'actionneur 1 comprend, en outre, un élément de polarisation PI disposé entre l'entrée pourvue du convertisseur analogique numérique ADC et le filtre analogique FL. L'élément de polarisation PI est alimenté par la même source de tension VDD que celle du processeur P. L'élément de polarisation PI comprend une résistance R168.

La figure 7 illustre un aspect spécifique du circuit électronique utilisé, pouvant être mis en œuvre indépendamment des dispositions de protection de l'actionneur 1. On retrouve sur la figure 7 la structure d'un générateur de signaux Can pourvu d'une résistance Rs et d'un filtre analogique FL, par exemple réalisé sous forme d'un circuit RC passe-bas, constitué par exemple par une résistance R167 et une capacité C1. Le générateur de signaux Can ainsi constitué est agencé pour délivrer un signal instantané SI représentatif de l'alimentation électrique fournie au moteur M, et en particulier du courant Is, à l'entrée pourvue du convertisseur analogique numérique ADC.

L'élément de polarisation PI est agencé pour délivrer un signal d'entrée par défaut lorsque le signal instantané SI n'est pas délivré à l'entrée pourvue du convertisseur analogique numérique ADC. Aussi, en fonctionnement normal lorsque le générateur de signaux Can fournit un signal, l'élément de polarisation PI n'a aucune influence sur la mesure du signal instantané SI.

Lorsqu'aucun signal instantané SI ne provient du filtre analogique FL, par exemple en cas d'anomalie de fonctionnement de l'actionneur 1, l'entrée pourvue du convertisseur analogique numérique ADC mesure un signal fonction de la tension VDD.

Ainsi, la mesure de la tension VDD par l'entrée du convertisseur analogique numérique ADC correspond à la détection d'une anomalie de fonctionnement du moteur M.

Selon l'exemple présenté, si le circuit est ouvert au niveau de la résistance R167, la résistance R168 polarise l'entrée du convertisseur analogique numérique ADC à la tension VDD.

On va décrire à présent, en référence à la figure 8, un procédé de contrôle et/ou de protection de l'actionneur 1 conforme à un mode de réalisation de l'invention.

Une première étape E1 consiste à disposer d'un signal instantané SI représentatif de l'alimentation électrique fournie au moteur M. Dans le mode de réalisation présenté à la figure 4, le signal instantané SI est une image du courant Is.

Une deuxième étape E2 consiste à réaliser un échantillonnage de valeurs du signal instantané SI. Comme illustré à la figure 4, l'échantillonnage représenté par les points est synchronisé avec les impulsions imp.

Dans le mode de réalisation présenté à la figure 4, un échantillonnage est réalisé sur chaque impulsion imp. Selon des variantes de réalisation, il serait également possible de réaliser un échantillonnage sur une partie seulement de la pluralité d'impulsions imp.

L'échantillonnage au milieu de chaque impulsion imp, comme cela est visible à la figure 5, a pour but d'éviter de mesurer les perturbations du signal instantané SI liées aux commutations de puissance.

Un échantillonnage est une mesure de la valeur du signal instantané SI réalisée au niveau de l'entrée du convertisseur analogique numérique ADC.

Une première étape de contrôle E3 selon un premier critère CRa de protection de l'actionneur 1 consiste à réaliser un contrôle systématique de chaque valeur échantillonnée ECH. La comparaison de la valeur échantillonnée ECH est comparée au premier critère de protection CRa de l'actionneur 1 avant la conversion suivante.

Les valeurs échantillonnées ECH sont ainsi contrôlées à leur réception à l'entrée pourvue du convertisseur analogique numérique ADC selon un premier critère CRa de protection de l'actionneur 1. Une fois le contrôle réalisé, la dernière valeur échantillonnée ECH et convertie par le convertisseur analogique numérique ADC est mémorisée jusqu'à la prochaine conversion d'une valeur échantillonnée ECH.

Toutefois, lorsqu'une valeur échantillonnée ECH ne respecte pas le premier critère CRa de protection de l'actionneur 1, le convertisseur analogique numérique ADC émet une première information d'anomalie IAa, en particulier à destination du processeur P.

Autrement dit, tant qu'aucune anomalie selon le premier critère CRa de protection de l'actionneur 1 n'est détectée au niveau de l'entrée pourvue du convertisseur analogique numérique ADC, aucun signal ayant un rapport avec la vérification du respect du premier critère CRa de protection de l'actionneur 1 n'est envoyé au processeur P. Cette disposition permet de limiter l'utilisation des ressources du processeur P.

Le premier critère CRa de protection de l'actionneur 1 consiste à comparer chaque valeur échantillonnée ECH à une première valeur seuil VS1, la première information d'anomalie IAa étant émise lorsque la valeur échantillonnée ECH est supérieure à la première valeur seuil VS1.

Le convertisseur analogique numérique ADC est donc agencé pour comparer chaque valeur échantillonnée ECH à la première valeur seuil VS1 et pour envoyer une première information d'anomalie IAa lors du franchissement de la première valeur seuil VS1 par la valeur échantillonnée ECH.

Une étape d'acquisition E3' d'un ensemble de valeurs ECHa parmi les valeurs échantillonnées ECH est réalisée parallèlement à l'étape de contrôle E3 selon le premier critère CRa de protection de l'actionneur 1, comme illustré à la figure 8.

L'étape d'acquisition E3' consiste à acquérir un ensemble de valeurs ECHa parmi les valeurs échantillonnées ECH et à déterminer une grandeur représentative GR à partir dudit ensemble de valeurs échantillonnées acquises ECHa. Cette étape d'acquisition E3' est réalisée par le processeur P.

Comme illustré à la figure 4 par les flèches, l'acquisition consiste, pour le convertisseur analogique numérique ADC, à transmettre la dernière valeur échantillonnée ECH au processeur P, suite à la demande du processeur P et avant le changement de commande Tcc1, Tcc2, Tcc3, Tcc4, Tcc5, Tcc6 représenté par une flèche.

Le fait de réaliser cette acquisition juste avant le changement de commande Tcc1, Tcc2, Tcc3, Tcc4, Tcc5, Tcc6 permet au processeur P de déterminer plus facilement la valeur que doit transmettre le convertisseur analogique numérique ADC au processeur P.

La valeur échantillonnée et acquise ECHa juste avant le changement de commande Tcc1, Tcc2, Tcc3, Tcc4, Tcc5, Tcc6 est une valeur représentative du couple moteur, tout comme les autres valeurs échantillonnées ECH.

Toutefois, la première valeur d'une séquence de commande est difficilement exploitable puisqu'elle présente une valeur faible. Pour les valeurs échantillonnées ECH suivantes, il serait nécessaire d'en déterminer une devant être transmise au processeur P pour traitement. Or, ce choix parmi les valeurs échantillonnées ECH ne peut être réalisé qu'une fois que la séquence de commande est terminée, l'ensemble des valeurs de la séquence de commande ayant été échantillonnées. Il conviendrait de prévoir des étapes supplémentaires mettant en œuvre un stockage dans une mémoire supplémentaire, car une fois que la séquence de commande est terminée, les valeurs converties par le convertisseur analogique numérique ADC sont écrasées par les valeurs suivantes.

Il apparaît ainsi que le choix de la dernière valeur de la séquence de commande est judicieux. Cette valeur de la séquence de commande est la dernière valeur convertie juste avant le changement de commande Tcc1, Tcc2, Tcc3, Tcc4, Tcc5, Tcc6.

De plus, cette valeur est plus facilement détectable car elle présente le niveau le plus élevé.

Le processeur P procède ensuite à la détermination de la grandeur représentative GR à partir de l'ensemble de valeurs ECHa parmi les valeurs échantillonnées ECH. Comme les valeurs échantillonnées ECHa sont acquises juste avant le changement de commande Tcc1,Tcc2, Tcc3, Tcc4, Tcc5, Tcc6, le processeur P est régulièrement alimenté en valeurs échantillonnées acquises ECHa.

Le processeur P détermine la grandeur représentative GR comme étant la moyenne glissante des dernières valeurs échantillonnées acquises ECHa, par exemple des douze dernières valeurs échantillonnées acquises ECHa.

Ainsi, les valeurs nouvellement échantillonnées acquises ECHa sont ajoutées à l'ensemble de valeurs échantillonnées acquises ECHa et les valeurs échantillonnées acquises ECHa les plus anciennes sont éliminées au fur et à mesure.

Une deuxième étape de contrôle E4' de la grandeur représentative GR succède à l'étape d'acquisition E3', comme illustré à la figure 8. La deuxième étape de contrôle E4' est réalisée par le processeur P.

L'étape de contrôle E4' de la grandeur représentative GR consiste à réaliser un contrôle de ladite grandeur représentative GR selon un second critère CRb de protection de l'actionneur 1 et à émettre une seconde information d'anomalie IAb, en particulier à destination du processeur P, si la grandeur représentative GR ne respecte pas le second critère CRb de protection de l'actionneur 1.

Le contrôle selon le second critère CRb de protection de l'actionneur 1 comprend, en outre, une comparaison d'une évolution temporelle ET des grandeurs représentatives GR successivement déterminées avec une évolution temporelle seuil ETS.

Cette disposition permet de déterminer une évolution temporelle ET de la grandeur représentative GR plus rapide que l'évolution attendue. En pratique, cette évolution peut correspondre à une soudaine augmentation ou une soudaine diminution du courant Is ayant traversé le moteur M. Dans ce cas, la seconde information d'anomalie IAb émise comprend une indication signalant le dépassement de l'évolution temporelle seuil ETS.

La vérification du second critère CRb de protection de l'actionneur 1 consiste également en une comparaison de la grandeur représentative GR à une seconde valeur seuil VS2.

La seconde information d'anomalie IAb est aussi émise lorsque la grandeur représentative GR est supérieure à la seconde valeur seuil VS2. Dans ce cas, la seconde information d'anomalie IAb émise comprend une indication signalant le franchissement de la seconde valeur seuil VS2.

De même que la première valeur seuil VS1, la seconde valeur seuil VS2 varie selon les modes de fonctionnement du moteur M.

On a représenté à la figure 6 différentes valeurs d'intensité limites parmi lesquelles sont choisies la première valeur seuil VS1 et la deuxième valeur seuil VS2 selon le mode de fonctionnement du moteur M.

A la figure 6, on a représenté en abscisse les modes de fonctionnement du moteur M selon un ordre chronologique depuis le démarrage du moteur M.

Le premier mode de fonctionnement est le mode de démarrage DEM, lorsque la vitesse de rotation du moteur M part d'une valeur nulle puis augmente jusqu'à une vitesse de rotation déterminée. Dans le premier mode de fonctionnement, le processeur P attend de recevoir une information de vitesse de rotation dite valide, et peut éventuellement rajouter une période de temps prédéterminée, pouvant être par exemple de l'ordre de 5ms.

Bien entendu, la période de temps prédéterminée ajoutée suite à la réception de l'information de vitesse de rotation n'est nullement limitative, et peut être différente. L'ajout de cette période de temps prédéterminée a pour but de rendre le logiciel plus robuste.

Le second mode de fonctionnement est un mode de transition TRA, la vitesse de rotation est maintenue pendant cette période TRA prédéterminée, qui correspond dans l'exemple présenté à deux tours du rotor du moteur M. Pendant ce mode de transition TRA, la vitesse de rotation du moteur M est régulée autour d'une vitesse de rotation prédéterminée, pouvant être par exemple de l'ordre de 1000 tours par minute.

Le troisième mode de fonctionnement est le mode de régulation REG, l'alimentation électrique fournie au moteur M est modifiée, en particulier par le processeur P, dans le but d'atteindre une vitesse de rotation de consigne.

Le quatrième mode de fonctionnement est le mode de fonctionnement stabilisé STA. Celui-ci peut par exemple commencer après une période déterminée suite au début du troisième mode de fonctionnement. Dans l'exemple présenté, le quatrième mode de fonctionnement commence 300 ms après le début du mode de régulation REG. Dans un autre exemple, le quatrième mode de fonctionnement peut commencer suite à l'atteinte de la vitesse de rotation de consigne.

A la figure 6, on a représenté en ordonnée des valeurs d'intensité limites.

Une première intensité limite I1 correspond à une valeur maximale admissible du courant Is, la valeur maximale admissible étant relative à des phénomènes de conduction simultanée de deux commutateurs d'un même bras du module d'alimentation IPM entraînant un court-circuit de l'alimentation électrique susceptibles d'apparaître au niveau des commutateurs K1, K2, K3, K4, K5, K6 d'alimentation en énergie électrique des enroulements B1, B2, B3 du moteur M.

Une seconde intensité limite I2 correspond à une valeur maximale admissible du courant Is après le passage dans le moteur M à ne pas dépasser afin que des aimants du rotor ne soient pas démagnétisés.

Une troisième intensité limite I3 correspond à une valeur maximale du courant Is de limitation du couple instantané délivré par l'actionneur 1.

Une quatrième intensité limite I4 correspond à une intensité Is moyenne de fonctionnement limite au-delà de laquelle le couple du moteur M est supérieur au couple maximum admissible par les éléments mécaniques de l'actionneur 1.

Le processeur P définit la première valeur seuil VS1 comme étant la plus faible des trois premières intensités limites I1, I2, I3. Dans l'exemple présenté à la figure 6, la première valeur seuil VS1 est donc la troisième intensité limite I3, ce qui correspond aux portions en traits gras de la figure 6.

On définit la seconde valeur seuil VS2 comme étant l'intensité limite la plus faible, c'est à dire I4. Ainsi, durant le mode de régulation REG et le mode de fonctionnement stabilisé STA, la deuxième valeur seuil VS2 est égale à la quatrième intensité limite I4.

Il apparaît ainsi, dans l'exemple présenté, que la première valeur seuil VS1 est supérieure à la seconde valeur seuil VS2 et que le franchissement ou dépassement de la seconde valeur seuil VS2 n'est pris en compte qu'à partir du mode de régulation REG.

Toutefois, la première valeur seuil VS1 et la deuxième valeur seuil VS2 sont des données paramétrables du processeur P. Elles pourraient être égales, ou alors la seconde valeur seuil VS2 pourrait être supérieure à la première valeur seuil VS1.

De plus, dans le cas d'un actionneur 1 présentant, notamment, une fonction de détection de butées de fins de course, durant le mode de fonctionnement stabilisé, le processeur P est agencé pour contrôler l'évolution temporelle ET de la grandeur représentative GR afin de pouvoir réaliser la détection des fins de course de l'actionneur 1. Il est à noter que la protection arrête le moteur M avant que le rotor soit bloqué.

Les fins de course de l'actionneur 1 correspondent aux butées ayant pour but de signaler soit la position ouverte du tablier du volet roulant, soit la position fermée du tablier du volet roulant.

Dans le cas d'un actionneur d'un type disposant d'une fonction de comptage, notamment par la détection des fins de course n'étant pas définies par des butées physiques, il est possible pour un utilisateur de définir un réglage des positions de fins de course, l'actionneur étant agencé pour s'arrêter sur les positions de fins de course ainsi définies.

On a aussi représenté une intensité de limitation fonctionnelle FON du couple. Cette valeur est utilisée par le système de régulation de la vitesse de rotation du moteur M. Lorsque cette intensité FON est atteinte, le processeur P est agencé pour faire diminuer la vitesse de rotation. En réaction, le courant Is est susceptible de changer. Toutefois, s'il existe une anomalie ou un dysfonctionnement dans le moteur M, le courant Is ne redescend pas forcément avec la vitesse de rotation du moteur M. Le processeur P détecte alors un dépassement de la seconde valeur seuil VS2 en mode de régulation REG ou en mode de fonctionnement stabilisé STA.

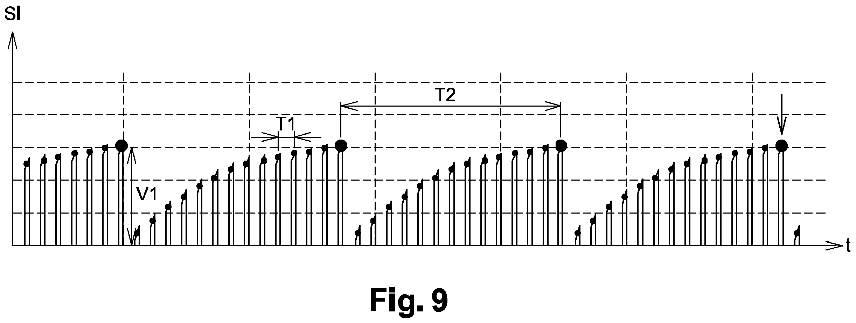

Les figures 9 à 12 présentent un exemple illustrant une méthode de détermination de l'utilisation des premier et deuxième critères de protection CRa, CRb de l'actionneur 1 lors de la mise en œuvre du procédé de contrôle et/ou de protection.

A la figure 9, on a représenté la tension Vs ainsi que des grandeurs susceptibles GR d'être mesurées, à savoir la tension V1 de l'impulsion la plus grande, une période T1 entre deux impulsions imp et une période T2 entre deux des changements de commande Tcc1 ,Tcc2, Tcc3, Tcc4, Tcc5, Tcc6.

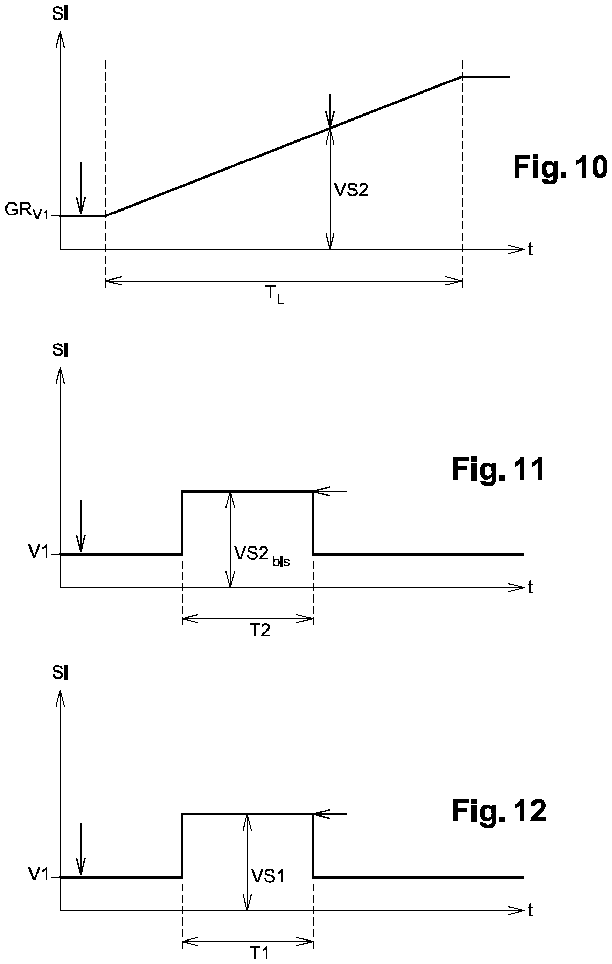

A la figure 10, on a représenté l'évolution de la grandeur représentative GR_{V1} de la tension V1 sur une période longue T_{L}, de l'ordre de 10 secondes. Il est possible de mesurer une valeur de la protection à la coupure du moteur M. En s'assurant que cette mesure a été réalisée après un temps assez long, on sait que le mode de fonctionnement stabilisé STA à été atteint. Si la coupure intervient pendant la période T_{L}, la valeur mesurée correspond donc à la seconde valeur seuil VS2, et par conséquent au contrôle du deuxième critère de protection CRb de l'actionneur 1.

Aux figures 11 et 12, on a représenté l'apparition soudaine de deux anomalies de fonctionnement ayant pour incidence de faire augmenter la valeur de la tension V1.

Comme illustré à la figure 12, si la coupure intervient durant la période T1 correspondant à l'intervalle entre deux impulsions imp, la tension de coupure correspond à la première valeur seuil VS1, et par conséquent au contrôle du premier critère de protection CRa de l'actionneur 1.

En outre, comme illustré à la figure 11, si la coupure du moteur intervient durant la période de temps T2 correspondant à la durée entre deux des changements de commande Tcc1, Tcc2, Tcc3, Tcc4, Tcc5, Tcc6, il s'agit du dépassement d'une autre seconde valeur seuil VS2bis, et par conséquent au contrôle du deuxième critère de protection CRb de l'actionneur 1. L'autre seconde valeur seuil VS2bis peut être différente de la valeur de la seconde valeur seuil VS2, car on contrôle une valeur instantanée entre deux des changements de commande Tcc1, Tcc2, Tcc3, Tcc4, Tcc5, Tcc6 et non la grandeur représentative GR_{V1}.

A partir de cet exemple, on voit qu'il est possible de mesurer la première valeur seuil VS1 et la deuxième valeur seuil VS2, et aussi une autre seconde valeur seuil VS2bis.

Il serait également possible de mesurer le dépassement de l'évolution temporelle seuil ETS selon le second critère de protection CRb de l'actionneur 1 en appliquant au convertisseur analogique numérique ADC plusieurs rampes de tension dont la valeur maximale ne dépasse pas la seconde valeur seuil VS2.

Les mesures réalisées précédemment permettent de détecter l'intensité limite la plus basse pour chaque critère de protection CRa, CRb de l'actionneur 1.

Comme il va de soi, l'invention ne se limite pas à la seule forme d'exécution de ce procédé de contrôle et/ou de protection d'un moteur, décrit ci-dessus à titre d'exemple, elle en embrasse au contraire toutes les variantes de réalisation qui tombent sous l'objet des revendications.

## Revendications

1. Procédé de contrôle et/ou de protection d'un actionneur (1) d'un équipement mobile d'un bâtiment, l'actionneur (1) comprenant un moteur (M) du type comprenant un rotor et un stator, le procédé comprenant les étapes consistant à :
- (E1) disposer d'un signal instantané (SI) représentatif de l'alimentation électrique fournie au moteur (M), le signal instantané (SI) présentant une pluralité d'impulsions (imp),
- (E2) réaliser un échantillonnage de valeurs (ECH) du signal instantané (SI), l'échantillonnage étant synchronisé avec au moins une partie des impulsions (imp) de la pluralité d'impulsions (imp) du signal instantané (SI),
- (E3) réaliser un contrôle de chaque valeur échantillonnée (ECH) selon un premier critère de protection (CRa) de l'actionneur (1), et émettre une première information d'anomalie (IAa) pour chaque valeur échantillonnée (ECH) ne respectant pas le premier critère de protection (CRa),
- (E3') acquérir un ensemble de valeurs (ECHa) parmi les valeurs échantillonnées (ECH),
- (E4') réaliser un contrôle selon un second critère de protection (CRb) de l'actionneur (1) appliqué à l'ensemble de valeurs échantillonnées acquises (ECHa), et émettre une seconde information d'anomalie (IAb) pour l'ensemble de valeurs échantillonnées acquises (ECHa) ne respectant pas le second critère de protection (CRb).

2. Procédé de contrôle et/ou de protection selon la revendication 1, dans lequel le moteur (M) présente au moins un premier mode de fonctionnement, notamment un mode de démarrage (DEM) du moteur (M), et un second mode de fonctionnement, notamment un mode de fonctionnement stabilisé (STA), et dans lequel le premier critère de protection (CRa) et/ou le second critère de protection (CRb) de l'actionneur (1) est modifié en fonction du mode de fonctionnement du moteur (M).

3. Procédé de contrôle et/ou de protection selon l'une quelconque des revendications précédentes, dans lequel, une grandeur représentative (GR) à partir dudit ensemble de valeurs échantillonnées acquises (ECHa) est déterminée, et le second critère de protection (CRb) de l'actionneur (1) est appliqué à ladite grandeur représentative (GR).

4. Procédé de contrôle et/ou de protection selon la revendication 3, dans lequel, lors de l'étape (E3') d'acquisition et de détermination de la grandeur représentative (GR), une valeur échantillonnée acquise (ECHa) ultérieurement aux valeurs échantillonnées acquises (ECHa) est ajoutée à l'ensemble de valeurs échantillonnées acquises (ECHa), la grandeur représentative (GR) étant déterminée à nouveau suite à l'ajout de la valeur échantillonnée (ECHa) acquise ultérieurement.

5. Procédé de contrôle et/ou de protection selon la revendication 4, dans lequel lors de l'ajout de la valeur échantillonnée acquise (ECHa) ultérieurement, la plus ancienne valeur échantillonnée acquise (ECHa) est supprimée de l'ensemble des valeurs échantillonnées acquises (ECHa).

6. Procédé de contrôle et/ou de protection selon la revendication 4 ou la revendication 5, dans lequel, le contrôle selon le second critère de protection (CRb) de l'actionneur (1) comprend, en outre, une comparaison d'une évolution temporelle (ET) des grandeurs représentatives (GR) successivement déterminées avec une évolution temporelle seuil (ETS).

7. Procédé de contrôle et/ou de protection selon l'une quelconque des revendications précédentes, dans lequel, le contrôle selon le premier critère de protection (CRa) de l'actionneur (1) comprend une comparaison de chaque valeur échantillonnée (ECH) à une première valeur seuil (VS1).

8. Procédé de contrôle et/ou de protection selon la revendication 7 en combinaison de l'une quelconque des revendications 3 à 6, dans lequel, le contrôle selon le second critère de protection (CRb) de l'actionneur (1) comprend une comparaison de la grandeur représentative (GR) à une seconde valeur seuil (VS2).

9. Produit programme d'ordinateur comprenant des instructions de code agencées pour mettre en œuvre les étapes d'un procédé de contrôle et/ou de protection selon l'une quelconque des revendications précédentes, lorsque ledit programme est exécuté sur un processeur (P) d'une unité de contrôle et/ou de protection (C).

10. Unité de contrôle et/ou de protection (C) pourvue d'un processeur (P) comprenant en mémoire les instructions de code d'un produit programme d'ordinateur selon la revendication 9, l'unité de contrôle et/ou de protection (C) étant agencée pour lire un signal instantané (SI) représentatif de l'alimentation électrique fournie à un moteur (M) de type comprenant un rotor et un stator.

11. Unité de contrôle et/ou de protection (C) selon la revendication 10, comprenant, en outre, un générateur de signaux (Can), agencé pour délivrer un signal instantané (SI) représentatif de l'alimentation électrique fournie au moteur (M), et un élément de polarisation (PI) agencé pour établir un signal d'entrée par défaut en lieu et place du signal instantané (SI) lorsque le générateur de signaux (Can) présente un défaut engendrant l'absence de signal (SI).

12. Unité de contrôle et/ou de protection (C) selon la revendication 10 ou la revendication 11, comprenant une unité de traitement numérique (Cnu), par exemple un microcontrôleur, l'unité de traitement numérique (Cnu) comprenant le processeur (P) et un convertisseur analogique numérique (ADC) agencé pour lire et convertir en un signal numérique interprétable par le processeur (P) le signal instantané (SI) représentatif de l'alimentation électrique fournie au moteur (M).

13. Actionneur (1) d'un équipement mobile d'un bâtiment comprenant :
- un moteur (M) de type comprenant un rotor et un stator,
- un module d'alimentation (IPM) agencé pour fournir une alimentation électrique au moteur (M),
- une unité de contrôle et/ou de protection (C) selon l'une quelconque des revendications 10 à 12, agencée pour lire un signal instantané (SI) représentatif de l'alimentation électrique fournie au moteur (M).

## Patentansprüche

1. Verfahren zum Kontrollieren und/oder Schützen eines Aktuators (1) einer mobilen Ausrüstung eines Gebäudes, wobei der Aktuator (1) einen Motor (M), in der Art einen Rotor und einen Stator umfassend, umfasst, wobei das Verfahren die Schritte umfasst, die darin bestehen:
- (E1) über ein sofortiges Signal (SI), das repräsentativ für die dem Motor (M) bereitgestellte Stromversorgung ist, zu verfügen, wobei das sofortige Signal (SI) eine Vielzahl von Impulsen (imp) aufweist,
- (E2) ein Abtasten von Werten (ECH) des sofortigen Signals (SI) durchzuführen, wobei das Abtasten mit mindestens einem Teil der Impulse (imp) der Vielzahl von Impulsen (imp) des sofortigen Signals (SI) synchronisiert wird,
- (E3) eine Kontrolle jedes abgetasteten Werts (ECH) gemäß einem ersten Schutzkriterium (CRa) des Aktuators (1) durchzuführen, und eine erste Information einer Anomalie (IAa) für jeden abgetasteten Wert (ECH) auszugeben, der das erste Schutzkriterium (CRa) nicht erfüllt,
- (E3') eine Gesamtheit von Werten (ECHa) aus den abgetasteten Werten (ECH) zu erfassen,
- (E4') eine Kontrolle gemäß einem zweiten Schutzkriterium (CRb) des Aktuators (1) durchzuführen, der auf die Gesamtheit von erfassten abgetasteten Werten (ECHa) angewandt wird, und eine zweite Information einer Anomalie (IAb) für die Gesamtheit von erfassten abgetasteten Werten (ECH) auszugeben, die das zweite Schutzkriterium (CRb) nicht erfüllen.

2. Verfahren zum Kontrollieren und/oder Schützen nach Anspruch 1, wobei der Motor (M) mindestens einen Betriebsmodus, insbesondere einen Startmodus (DEM) des Motors (M), und einen zweiten Betriebsmodus, insbesondere einen stabilisierten Betriebsmodus (STA) aufweist, und wobei das erste Schutzkriterium (CRa) und/oder das zweite Schutzkriterium (CRb) des Aktuators (1) in Abhängigkeit von dem Betriebsmodus des Motors (M) geändert wird.

3. Verfahren zum Kontrollieren und/oder Schützen nach einem der vorstehenden Ansprüche, wobei eine repräsentative Größe (GR) aus der Gesamtheit von erfassten abgetasteten Werten (ECHa) bestimmt wird, und das zweite Schutzkriterium (CRb) des Aktuators (1) auf die repräsentative Größe (GR) angewandt wird.

4. Verfahren zum Kontrollieren und/oder Schützen nach Anspruch 3, wobei beim Schritt (E3') zum Erfassen und Bestimmen der repräsentativen Größe (GR) ein später als die erfassten abgetasteten Werte (ECHa) erfasster abgetasteter Wert (ECHa) zur Gesamtheit von erfassten abgetasteten Werten (ECHa) hinzugefügt wird, wobei die repräsentative Größe (GR) nach dem Hinzufügen des später erfassten abgetasteten Wertes (ECHa) erneut bestimmt wird.

5. Verfahren zum Kontrollieren und/oder Schützen nach Anspruch 4, wobei beim Hinzufügen des später erfassten abgetasteten Wertes (ECHa) der älteste erfasste abgetastete Wert (ECHa) aus der Gesamtheit von erfassten abgetasteten Werten (ECHa) gelöscht wird.

6. Verfahren zum Kontrollieren und/oder Schützen nach Anspruch 4 oder Anspruch 5, wobei die Kontrolle gemäß dem zweiten Schutzkriterium (CRb) des Aktuators (1) weiter einen Vergleich einer zeitlichen Entwicklung (ET) der nacheinander bestimmten repräsentativen Größen (GR) mit einer zeitlichen Schwellenentwicklung (ETS) umfasst.

7. Verfahren zum Kontrollieren und/oder Schützen nach einem der vorstehenden Ansprüche, wobei die Kontrolle gemäß dem ersten Schutzkriterium (CRa) des Aktuators (1) einen Vergleich jedes abgetasteten Werts (ECH) mit einem ersten Schwellenwert (VS1) umfasst.

8. Verfahren zum Kontrollieren und/oder Schützen nach Anspruch 7, in Kombination mit einem der Ansprüche 3 bis 6, wobei die Kontrolle gemäß dem zweiten Schutzkriterium (CRb) des Aktuators (1) einen Vergleich der repräsentativen Größe (GR) mit einem zweiten Schwellenwert (VS2) umfasst.

9. Computerprogrammprodukt, Codeanweisungen, die ausgeführt sind, um die Schritte eines Verfahrens zum Kontrollieren und/oder Schützen nach einem der vorstehenden Ansprüche umzusetzen, umfassend, wenn das Programm auf einem Prozessor (P) einer Einheit zum Kontrollieren und/oder Schützen (C) ausgeführt wird.

10. Einheit zum Kontrollieren und/oder Schützen (C), die mit einem Prozessor (P) versehen ist, der im Speicher die Codeanweisungen eines Computerprogrammprodukts nach Anspruch 9 umfasst, wobei die Einheit zum Kontrollieren und/oder Schützen (C) ausgeführt ist, um ein sofortiges Signal (SI) zu lesen, das repräsentativ für die einem Motor (M), in der Art einen Rotor und einen Stator umfassend, bereitgestellte Stromversorgung ist.

11. Einheit zum Kontrollieren und/oder Schützen (C) nach Anspruch 10, weiter einen Signalgenerator (Can) umfassend, der ausgeführt ist, um ein sofortiges Signal (SI), das repräsentativ für die einem Motor (M) bereitgestellte Stromversorgung ist, zu erstellen, und ein Polarisationselement (PI), das ausgeführt ist, um ein standardgemäßes Eingangssignal anstelle des sofortigen Signals (SI) festzulegen, wenn der Signalgenerator (Can) einen Fehler aufweist, der zur Abwesenheit des Signals (SI) führt.

12. Einheit zum Kontrollieren und/oder Schützen (C) nach Anspruch 10 oder Anspruch 11, umfassend eine digitale Verarbeitungseinheit (Cnu), beispielsweise einen Mikro-Controller, wobei die digitale Verarbeitungseinheit (Cnu) den Prozessor (P) und einen Analog-Digital-Wandler (ADC) umfasst, der ausgeführt ist, um das sofortige Signal (SI), das repräsentativ für die einem Motor (M) bereitgestellte Stromversorgung ist, zu lesen und in ein durch den Prozessor (P) interpretierbares digitales Signal umzuwandeln.

13. Aktuator (1) einer mobilen Ausrüstung eines Gebäudes, Folgendes umfassend:
- einen Motor (M) in der Art einen Rotor und einen Stator umfassend,
- ein Versorgungsmodul (IPM), das ausgeführt ist, um dem Motor (M) eine Stromversorgung bereitzustellen,
- eine Einheit zum Kontrollieren und/oder Schützen (C) nach einem der Ansprüche 10 bis 12, ausgeführt, um ein sofortiges Signal (SI) zu lesen, das repräsentativ für die einem Motor (M) bereitgestellte Stromversorgung ist.

## Claims

1. A method for controlling and/or protecting an actuator (1) of a movable equipment of a building, the actuator (1) comprising a motor (M) of the type comprising a rotor and a stator, the method comprising the steps consisting of:
- (E1) disposing an instantaneous signal (SI) representative of the electrical power supply, supplied to the motor (M), the instantaneous signal (SI) presenting a plurality of pulses (imp),
- (E2) performing a sampling of values (ECH) of the instantaneous signal (SI), the sampling being synchronized with at least one portion of the pulses (imp) of the plurality of pulses (imp) of the instantaneous signal (SI),
- (E3) performing a control of each sampled value (ECH) according to a first protection criterion (CRa) of the actuator (1), and transmitting a first anomaly information (lAa) for each sampled value (ECH), not complying with the first protection criterion (CRa),
- (E3') acquiring a set of values (ECHa) among the sampled values (ECH),
- (E4') performing a control according to a second protection criterion (CRb) of the actuator (1) applied to the set of acquired sampled values (ECHa), and transmitting a second anomaly information (lAb) for the set of acquired sampled values (ECHa) not complying with the second protection criterion (CRb).

2. The control and/or protection method according to claim 1, wherein the motor (M) presents at least one first operating mode, in particular a starting mode (DEM) of the motor (M), and a second operating mode, in particular a stabilized operating mode (STA), and in which the first protection criterion (CRa) and/or the second protection criterion (CRb) of the actuator (1) is modified depending on the operating mode of the motor (M).

3. The control and/or protection method according to any one of the preceding claims, wherein a representative magnitude (GR) from said set of acquired sampled values (ECHa) is determined, and the second protection criterion (CRb) of the actuator (1) is applied to said representative magnitude (GR).

4. The control and/or protection method according to claim 3, wherein, during the step (E3') of acquiring and determining the representative magnitude (GR), an acquired sampled value (ECHa) subsequent to the acquired sampled values (ECHa) is added to the set of the acquired sampled values (ECHa), the representative magnitude (GR) being determined again following the addition of the subsequently acquired sampled value (ECHa).

5. The control and/or protection method according to claim 4, wherein while adding the subsequently acquired sampled value (ECHa), the oldest acquired sampled value (ECHa) is deleted from the set of acquired sampled values (ECHa).

6. The control and/or protection method according to claim 4 or claim 5, wherein, the control according to the second protection criterion (CRb) of the actuator (1) further comprises a comparison of a temporal evolution (ET) of the representative magnitudes (GR) successively determined with a threshold temporal evolution (ETS).

7. The control and/or protection method according to any one of the preceding claims, wherein, the control according to the first protection criterion (CRa) of the actuator (1) comprises a comparison of each sampled value (ECH) to a first threshold value (VS1).

8. The control and/or protection method according to claim 7 in combination of any one of claims 3 to 6, wherein, the control according to the second protection criterion (CRb) of the actuator (1) comprises a comparison of the representative magnitude (GR) to a second threshold value (VS2).

9. A computer program product comprising code instructions arranged to implement the steps of a control and/or protection method according to any one of the preceding claims, when said program is executed on a processor (P) of a control and/or protection unit (C).

10. A control and/or protection unit (C) provided with a processor (P) comprising in memory the code instructions of a computer program product according to claim 9, the control and/or protection unit (C) being arranged to read an instantaneous signal (SI) representative of the electric power supply supplied to a motor (M) of the type comprising a rotor and a stator.

11. The control and/or protection unit (C) according to claim 10, further comprising a signal generator (Can), arranged to deliver an instantaneous signal (SI) representative of the electric power supply supplied to the motor (M), and a polarization element (PI) arranged to establish a default input signal instead of the instantaneous signal (SI) when the signal generator (Can) presents a fault generating the absence of the signal (SI).

12. The control and/or protection unit (C) according to claim 10 or claim 11, comprising a digital processing unit (Cnu), for example a microcontroller, the digital processing unit (Cnu) comprising the processor (P) and an analog-to-digital converter (ADC) arranged to read and convert the instantaneous signal (SI) representative of the electric power supply supplied to the motor (M) into a digital signal interpretable by the processor (P).

13. An actuator (1) of a movable equipment of a building comprising:
- a motor (M) of the type comprising a rotor and a stator,
- a power supply module (IPM) arranged to supply an electric power supply to the motor (M),
- a control and/or protection unit (C) according to any one of claims 10 to 12, arranged to read an instantaneous signal (SI) representative of the electric power supply supplied to the motor (M).
